(19) Europäisches Patentamt

European Patent Office

Office européen des brevets

(11) Veröffentlichungsnummer: **0 021 270**
**B1**

# EUROPÄISCHE PATENTSCHRIFT

(45) Veröffentlichungstag der Patentschrift:
26.09.84

(51) Int. Cl.³: **H 02 K 23/00**

(21) Anmeldenummer: **80103290.5**

(22) Anmeldetag: **12.06.80**

(54) **Kommutatormotor in Flachbauweise.**

(30) Priorität: **30.06.79 DE 2926545**
**13.09.79 DE 2937139**

(43) Veröffentlichungstag der Anmeldung:
**07.01.81 Patentblatt 81/01**

(45) Bekanntmachung des Hinweises auf die Patenterteilung: **26.09.84 Patentblatt 84/39**

(84) Benannte Vertragsstaaten:
**DE FR GB IT SE**

(56) Entgegenhaltungen:
**BE-A- 507 263**
**FR-A- 1 440 800**
**FR-A- 1 561 188**
**FR-A- 1 588 136**
**FR-A- 2 008 830**

(73) Patentinhaber: **Siemens Aktiengesellschaft**
**Berlin und München Wittelsbacherplatz 2**
**D-8000 München 2 (DE)**

(72) Erfinder: **Braungardt, Karl-Heinz**
**An den Mühlen 10**
**D-8700 Würzburg (DE)**
Erfinder: **Wehner, Ewald**
**Flürleinstrasse 12**
**D-8700 Würzburg (DE)**
Erfinder: **Adam, Peter**
**Allerseeweg 25**
**D-8706 Höchberg (DE)**
Erfinder: **Wohlfart, Hans**
**Bgm.-Rheinstrasse 7**
**D-8705 Zellingen (DE)**

## Beschreibung

Die Erfindung bezieht sich auf einen Kommutatormotor in Flachbauweise gemäß Oberbegriff des Anspruchs 1.

Ein derartiger Kommutatormotor ist aus der FR-A-1 561 188 bekannt.

Bei dem vorgenannten bekannten Kommutatormotor wird ein üblicher Scheibenkommutator verwendet, dessen dem Läuferpaketträger abgewandte stirnseitige Schleiffläche in üblicher Weise von in Kastenbürstenhaltern geführten, axial andrückenden Kohlebürsten bestrichen wird. Die ebenfalls in üblicher Weise über die andere Stirnseite des Scheibenkommutators axial herausragenden Lamellenenden sind mit Haken versehen, die ihrerseits über gesonderte Verbindungen an die eigentliche Läuferwicklung angeschlossen sind. Die Lamellenenden sind durch entsprechende Öffnungen in dem Läuferpaketträger herausgeführt ; ansonsten ist der gesamte Zwischenraum zwischen dem Läuferpaket und der Läuferwelle durch den Läuferpaketträger und den Scheibenkommutator ausgefüllt.

Insbesondere bei längs zur Fahrtrichtung eingebauten Verbrennungsmotoren in Kraftfahrzeugen ist der Einbauraum für einen elektrisch betriebenen Ventilator zur Kühlung des Kühlers sehr begrenzt. Konventionelle Dauermagnetmortoren mit Rundkommutatoren lassen sich wegen ihrer großen axialen Baulänge daher nicht einsetzen. Es sind zu diesem Zwecke daher bereits für elektrisch angetriebene Kühlerventilatoren Kommutatormotoren in Flachbauweise mit Scheibenkommutatoren bekannt geworden, die einen relativ großen Durchmesser und kurze Kohlebürsten an axialer Anordnung bei gleichzeitig relativ flacher Pakethöhe aufweisen.

Aufgabe der vorliegenden Erfindung ist es daher, bei Beibehaltung der günstigen Flachbauweise und Gewährleistung langer Betriebsstandzeiten den Kommutatormotor in Fertigung und Montage wesentlich aufwandsärmer zu gestalten zu können.

Die Lösung dieser Aufgabe ist bei einem Kommutatormotor der eingangs genannten Art erfindungsgemäß durch die kennzeichnenden Merkmale des Anspruchs 1 möglich.

Die Gegenstände der abhängigen Ansprüche kennzeichnen vorteilhafte Ausgestaltungen der Erfindung.

Es ist zwar die Verwendung eines Kommutatormotors mit Rund-Kommutator zum Antrieb eines Kfz-Lüftermotors bekannt, (FR-A-1 440 800) doch fehlt dort jegliche Ähnlichkeit mit der einfachen Fertigungs- und Montagetechnik zur Herstellung der Verbindung zwischen Kommutator und zugehöriger Wicklung gemäß vorliegender Erfindung.

Bei dem erfindungsgemäß aufgebauten Flachmotor kann auf aufwendige Scheibenkommutatoren und die dabei notwendigen aufwendigen Bürstensysteme mit axial angeordneten und daher bei Forderung nach kurzer axialer Baulänge des gesamten Motors nur kurze Betriebsstandzeiten gewährleistenden Bürsten verzichtet werden ; die an den Verlängerungen der Lamellen angeformten Haken können aufgrund ihrer erfindungsgemäßen Lage beim Wickeln der Läuferwicklung z. B. mittels eines sogenannten Flyers auf einfache Weise mitumschlungen und anschließend z. B. durch Heißverstemmen endgültig und fest gegenseitig kontaktiert werden.

Die gegenseitige Kontaktierung, insbesondere durch Heißverstemmen mittels Schweißelektroden, wird dabei dadurch begünstigt, daß zu den im Bereich der Öffnungen liegenden Haken übliche Schweißelektroden zum Heißverstemmen auch vom freien radialen Zwischenraum zwischen Läuferpaket und Läuferwelle her, in den bei der späteren Montage das Bürstensystem eingesteckt wird, ohne Behinderung zuführbar sind.

Nach besonderen Ausgestaltungen der Erfindung ist vorgesehen, daß der Läuferpaketträger aus einem einteiligen Stanz-Biege-Blechteil besteht, das an seinem radial inneren Ende mit einer angeformten tiefgezogenen Nabe auf die Läuferwelle gedrückt ist und and seinem radial äußeren Ende mit dem Läuferblechpaket fest verbunden ist oder daß der Läuferpaketträger aus einem einstückigen Druckgußteil besteht, das wiederum an seinem radial inneren Ende mit einer angegossenen Nabe auf die Läuferwelle gedrückt ist und an seinem radial äußeren Ende mit dem Läuferblechpaket fest verbunden ist.

In beiden vorgenannten Fällen eines als Stanz-Biege-Blechteil oder Druckgußteil hergestellten Läuferpaketträgers sind die Verlängerungen der Lamellen des Kommutators frei und somit luftisoliert durch entsprechende Öffnungen des Läuferpaketträgers nach außen herausgeführt, wo sie in den mit dem Läuferwicklungsdraht zu kontaktierenden Haken münden.

Um bei Beibehaltung der günstigen Flachbauweise und einfachen Fertigung und Montage eine höhere Steifigkeit der Lamellenverlängerungen zu den äußeren Haken zu erzielen und somit der Gefahr betriebsmäßig auftretender Vibrationsschwingungen im Bereich der Verlängerungen einfacher eintgegenwirken zu können, ist nach einer weiteren Ausgestaltung der Erfindung vorgesehen, daß der Läuferpaketträger aus Kunststoff besteht und die Verlängerungen zwischen den Lamellen des auf der Läuferwelle befestigten Rundkommutators und dem Haken zumindest über einen Teilbereich in den Läuferpaketträger eingebettet sind ; dadurch lassen sich auf einfache Weise ein das Läuferpaket mit der Welle verbindender Läuferpaketträger herstellen und gleichzeitig eine isolierte zusätzliche Halterung der Verlängerungen im Bereich des Läuferpaketträgers schaffen.

Falls zur Kontaktierung zwischen den Haken und den beim Bewickeln der Läuferwicklung umschlungenen Wicklungsdrähte ein Heißverstemmen vorgesehen ist, so könnte beispielsweise für die zwischen den Haken und der gegenüberliegenden äußeren Stirnseite des Läuferpaketträgers zuzuführende Elektrode eine verkröpfte Form gewählt werden. Nach einer Ausgestaltung der Erfindung ist jedoch insbesondere in einem solchen Fall einer Heißverstemmung vorgesehen, daß der Läuferpaketträger im radialen äußeren Bereich mit solchen Öffnungen versehen und die Verlängerungen derart geformt sind, daß die äußeren Enden mit den Haken durch die Öffnung auch vom Zwischenraum her frei zugänglich sind, so daß also eine normale Schweißelektrode vom Zwischenraum her durch die Öffnung an den der Öffnung gegenüberliegenden freien Haken zugeführt werden kann.

Die Erfindung sowie weitere vorteilhafte Ausgestaltungen werden im folgenden anhand schematisch dargestellter Ausführungsbeispiele in der Zeichnung näher erläutert. Darin zeigen :

Figur 1 in einem Längsschnitt einen kompletten Kommutatormotor in Flachbauweise mit einem Stahlblech-Läuferpaketträger,

Figur 2 in stirnseitiger Draufsicht in der unteren Bildhälfte den in Fig. 1 dargestellten Motor bei entferntem Lagerschild und in der oberen Bildhälfte das am Lagerschild gehaltene vorgesehene Bürstensystem,

Figur 3 in einem Längsschnitt den als Stanz-Biege-Blechteil hergestellten Läuferpaketträger,

Figur 4 in einem Längsschnitt den als Druckgußteil hergestellten Läuferpaketträger,

Figur 5 in einem Längsschnitt den als Kunststoffteil hergestellten Läuferpaketträger mit Öffnungen im Bereich der Haken.

Ein zylindrisches Gehäuse 3 ist an beiden Stirnseiten mit je einem Lagerschild 10 bzw. 11 fest verbunden. Am Innenumfang des zylindrischen Gehäuses 3 anliegend sind mehrere Teilschalen-Dauermagnete 12 mittels Klemmfedern 14 und aus dem Gehäuse 3 herausgebogener Anschläge 13 gehalten. Die Läuferwelle 18 ist in einem Kalottenlager im rechten Lagerschild 10 und in einem Kugellager im linken Lagerschild 11 drehbar gelagert.

Zur Halterung des Läuferblechpaketes 1 ist ein Läuferpaketträger 5 bzw. 6 bzw. 8 vorgesehen, an dem das Läuferpaket 1 mit seinen linken Ende befestigt ist und derart einseitig im radialen Abstand zur Läuferwelle 18 gehalten wird ; dadurch ergibt sich zwischen der Innenumfangsfläche des Läuferpaketes 1 und der Läuferwelle 18 ein zunächst freier Zwischenraum, in den ein Rundkommutator 4 und ein Hammer-Bürstensystem 9 eintauchen, ohne axial über die durch den übrigen Ständer- bzw. Läuferaufbau gegebenen Maße hinauszuragen.

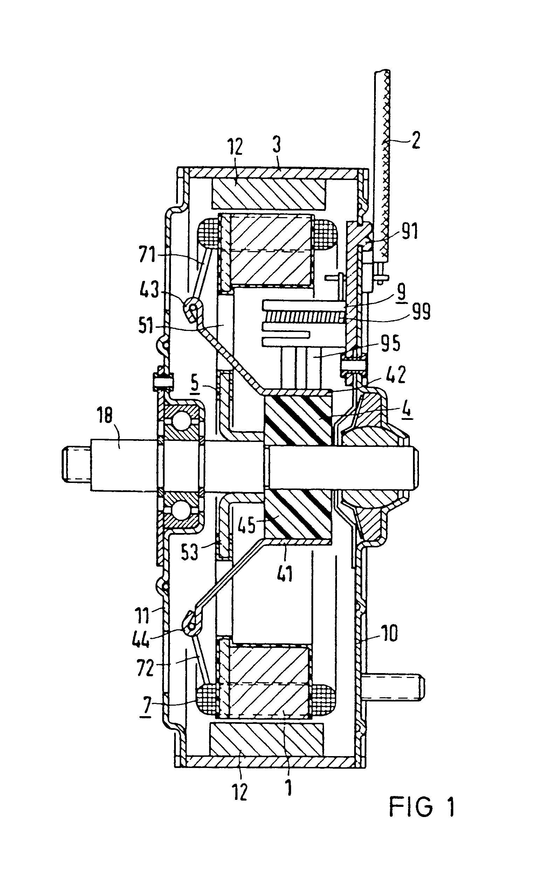

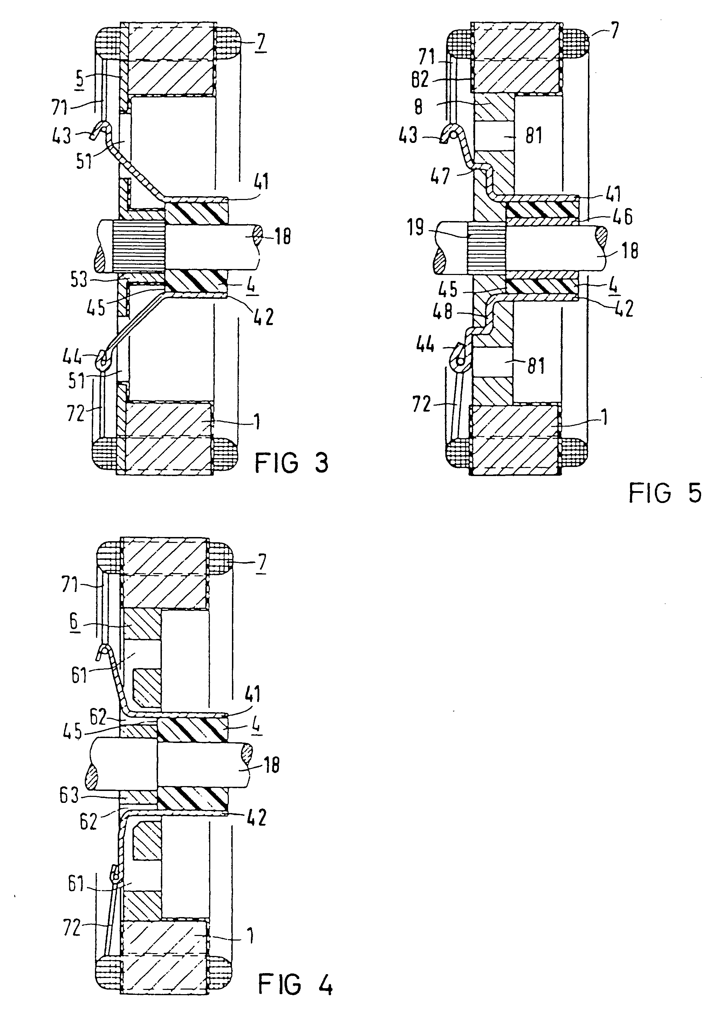

Der in den Figuren 1 und 3 dargestellte Läuferpaketträger 5 besteht aus einem einteiligen Stanz-Biege-Blechteil, das an seinem radial inneren Ende mit einer angeformten tiefgezogenen Nabe 53 auf der Läuferwelle 18 gehalten wird und an seinem radial äußeren Ende mit dem Läuferpaket 1 fest verbunden ist.

Der in Fig. 4 dargestellte Läuferpaketträger 6 besteht aus einem einstückigen Druckgußteil, das an seinem radial inneren Ende mit einer angegossenen Nabe 63 auf der Läuferwelle 18 gehalten wird und an seinem radial äußeren Ende mit dem Läuferblechpaket 1 fest verbunden ist.

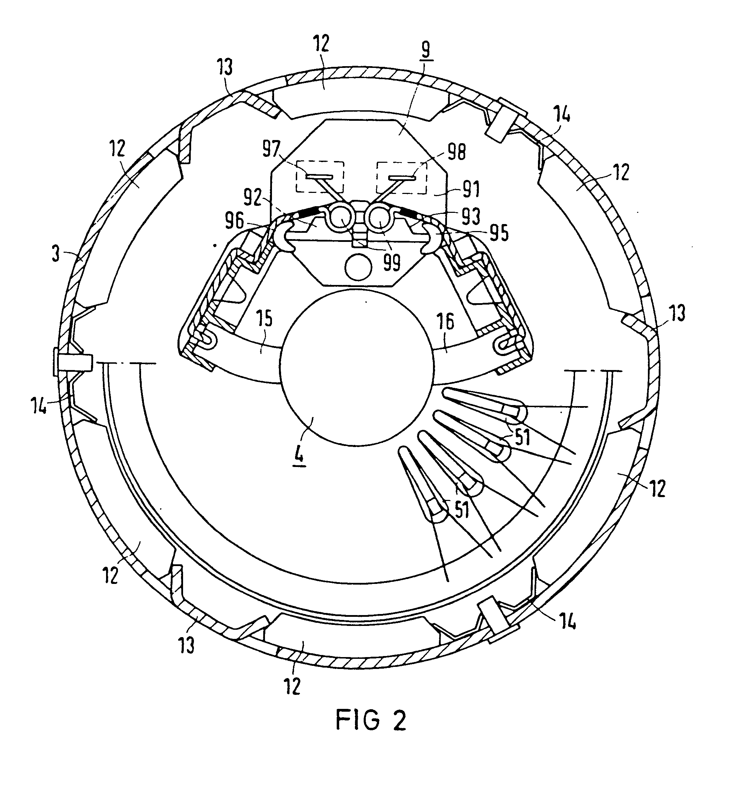

Wie insbesondere aus den Fig. 1 und 2 ersichtlich, weist der Läuferpaketträger 5 nach besonderen Ausgestaltungen der Erfindung an seinem Umfang verteilt mehrere der Lamellenzahl entsprechende Öffnungen 51 auf. Jede Lamelle 41, 42 des Rundkommutators 4 ist über die dem Läuferpaketträger 5 zugewandte Stirnseite der Kommutatornabe 45 hinaus durch je eine Öffnung 51 bis zu je einem endseitigen Kommutatorhaken 43, 44 derart verlängert, daß die Haken 43, 44 einerseits beim Wickeln der Läuferwicklung vom Wicklungsdraht 71, 72 ungehindert umschlingbar und andererseits jeweils durch die Öffnung 51 von beiden Seiten her axial zugänglich sind.

Bei der Ausführung des Läuferpaketträgers nach Fig. 4 ist einerseits jeweils für jede verlängerte Lamelle 41, 42 eine erste Öffnung 61 und andererseits eine zweite Öffnung 62 zur freien läuferseitigen Zugänglichkeit vom freien Zwischenraum zwischen Kommutatornabe mit Lamellen und Läuferpaket her vorgesehen.

Der in der Figur 5 dargestellte Läuferpaketträger 8 besteht aus einem Kunststoffteil, das an seinem radial inneren Ende auf die zumindest in diesem Bereich mit einer Rändelung 19 versehene Läuferwelle 18 und mit seinem radial äußeren Ende an das Läuferpaket 1 angespritzt bzw. angegossen ist. In vorteilhafter Weise karn gleichzeitig mit dem Spritzen bzw. Geißen des Läuferpaketträgers eine Läuferpaketisolierung 82, insbesondere der Nuten und/oder Stirnflächen des Läuferpaketes 1 aufgespritzt bzw. aufgegossen werden. In fertigungstechnisch besonders aufwandsarmer Weise sind die Verlängerungen 47, 48 der Lamellen 41, 42 des auf der Läuferwelle 18 befestigten Rundkommutators 4 bei der Herstellung des Läuferpaketträgers 8 miteingespritzt bzw. miteingegossen und derart zusätzlich zur Vermeidung von Vibrationen im Betrieb versteifend gehaltert.

Fig. 5 zeigt die Verlängerungen 47, 48 in einstückiger Ausführung mit den Lamellen 41, 42 des Rundkommutators 4 und mit den Haken 43, 44, die von den Wicklungsdrähten 71, 72 der Läuferwicklung 7 umschlungen sind. Eine weitere vorteilhafte Ausgestaltungen der Erfindung ist dadurch gekennzeichnet, daß die Verlängerungen 47, 48 als getrennte, lediglich an ihren äußeren Enden mit Haken 41, 43 versehene Einzelteile mit ihren kommutatorseitigen Enden an die Lamellen 41, 42 eines üblichen Rundkommutators 4 angeschweißt, insbesondere angepunktet sind. Die Verbindungspunkte zwischen den Verlängerungen 47, 48 und dem Lamellen 41, 42 sind zweckmäßigerweise in den als Kunststoffteil ausgebildeten Läuferpaketträger 8 eingespritzt. Im oberen Teil der Fig. 3 bis 5 ist ein Haker 43 unmittelbar nach dem Umschlingen durch den Wicklungsdraht 71 der Läuferwicklung 7 und im unteren Teil der Fig. 3 bis 5 ein Haken nach dem anschließenden Heißverstemmen zur gegenseitigen Kontaktierung zwischen dem Haken 43 und dem Wicklungsdraht 42 der Läuferwicklung 7 dargestellt. In vorteilhafter Weise ist dazu vorgesehen, daß der Läuferpaketträger 5 bzw. 6 bzw. 8 im radial äußeren Bereich mit solchen Öffnungen 51 bzw. 61 bzw. 81 versehen und die Verlängerungen 47, 48 der Lamellen 41, 42 derart geformt sind, daß die äußeren Enden der Verlängerungen 47, 48 mit den Haken 43, 44 durch die Öffnungen 51 bzw. 61 bzw. 81 jeweils auch vom Zwischenraum bzw. Innenraum der Läuferglocke her frei zugänglich sind ; auf diese Art und Weise lassen sich übliche maschinelle Einrichtungen zum Heißverstemmen benutzen, da die beiden Elektroden axial, insbesondere auch vom rechten Zwischenraum bzw. Innenraum der Glocke her durch die Öffnungen 51 bzw. 61 bzw. 81 an die Haken herangeführt werden können.

Bei der Fertigung des erfindungsgemäßen Kommutatormotors in Flachbauweise mit dem als Kunststoffteil ausgeführten Läuferpaketträger 8 wird zweckmäßigerweise wie folgt vorgegangen :

In eine Gieß- bzw. Spritzform werden in gegenseitiger maßhaltiger Zuordnung das unbewickelte Läuferpaket und die Welle 18 mit dem darauf beispielsweise durch eine Klebschicht 46 verbundenen Kommutator mit den Verlängerungen 47, 48 der Lamellen 41, 42 und den offenen Haken 43, 44 eingelegt. Die Verlängerungen 47, 48 sind entweder als einstückige Teile der Lamellen 41, 42 (Fig. 5) ausgebildet oder als getrennte Einzelteile an diese zuvor angepunktet. Anschließend erfolgt der eigentliche Spritz- bzw. Gießvorgang des Läuferpaketträgers 8, bei dem das Läuferpaket 1 über den gegossenen Läuferpaketträger 8 mit der Läuferwelle 18 und dem Kommutator 4 verbunden und die Verlängerungen 47, 48 in dem Läuferpaketträger 8 im Sinne einer schwingungsfreien Halterung eingebettet werden und gleichzeitig eine Nut- und Stirnseitenisolierung des Läuferpaketes 1 erfolgt ; danach wird die Läuferwicklung 7 in das Läuferpaket 1 eingewickelt und dabei die Läuferwicklung 7 über die Wicklungsdrähte 71, 72 mit den Haken 43, 44 verbunden. Nach dem Einbringen der Läuferwicklung 7 werden schließlich die Haken 43, 44 wie zuvor beschrieben, z. B. durch Heißverstemmen (Fig. 5) oder Tauchlöten mit den umschlungenen Wicklungsdrähten 71, 72 kontaktiert.

Die Verlängerungen 47, 48 sind zweckmäßigerweise derart geformt, daß sie eine sichere Einbettung in den gespritzten oder gegossenen Läuferpaketträger ohne Gefahr eines Ausbrechens an den Stirnseiten des Läuferpaketträgers gewährleisten ; dies bedingt im wesentlichen einen radialen Verlauf im Inneren und einen axialen Verlauf an den aus dem Läuferpaketträger austretenden Enden ; von dieser Form der Verlängerung wird gemäß Fig. 5 nur insoweit abgewichen, als das aufgrund der Öffnungen 81 notwendig ist und einen schrägen oder winkligen Austritt der Verlängerungen aus der Stirnseite des Läuferpaketträgers erfordert.

Bei der weiteren Montage des gesamten Kommutatormotors in Flachbauweise wird die Läuferglocke in das umgebende Gehäuse eingesetzt, wobei bei der Montage des rechten Lagerschildes 10 das daran befestigte Bürstensystem 9 in den zuvor zur Einführung der einen Schweißelektrode beim Heißverstemmen (Fig. 5) zur Verfügung stehenden freien Zwischenraum zwischen dem Außenumfang des Kommutators 4 und dem Innenumfang des Läuferpaketes 1 eintaucht. Das in den Zwischenraum nach den Ausgestaltungen dem Figuren 1 bis 5 eintauchende Bürstensystem wird im folgenden näher beschrieben.

Als Bürstensystem ist dem Rundkommutator 4 ein Hammerbürstensystem 9 zugeordnet, das von der dem Läuferpaketträger abgewandten Seite in den verbleibenden Zwischenraum zwischen Rundkommutator 4 und Läuferpaket 1 hineinragt.

Das nach einer Ausgestaltung der Erfindung als Bürstensystem vorgesehene Hammerbürstensystem 9 besteht im wesentlichen aus einer am Motorlagerschild 10 befestigten, beispielsweise heiß vernieteten, Kunststoffbürstenbrücke 91 mit axial angeformten, in den verbleibenden Zwischenraum zwischen Rundkommutator 4 und Läuferpaket 1 ragenden Halterungsschienen 92, 93, an deren Hammerbürstenhalter 94, 95 mit Kohlebürsten 15, 16 eingehängt und durch hier nicht näher dargestellte Federn gesichert und gegen die Lamellen des Rundkommutators 4 gedrückt werden. Wesentliche Teile eines derartigen Hammerbürstensystems sind bereits in der DE-B-28 13 956 beschrieben.

In der Bürstenbrücke 91 sind gleichzeitig Anschlußstifte 97, 98 isoliert gehalten, die mit ihrem einen Ende durch Öffnungen im Lagerschild 10 nach außen geführt und mit einer äußeren Anschlußleitung 2 verlötet sind und an deren anderes Ende Verbindungen zu einer oberhalb der Halterungsschienen 92, 93 angeordneten Entstördrosseln 99 angelötet sind, deren anderes Anschlußende seinerseits mit den Zuleitungen zu den Kohlebürsten 15, 16 preßverschweißt ist.

**Ansprüche**

1. Kommutatormotor in Flachbauweise, insbesondere für Kühlerventilatoren in Kraftfahrzeugen, mit enseitig über einen Läuferpaketträger (5, 6, 8) in radialem Abstand zur Läuferwelle (18) gehaltenem Läuferpaket (1) mit Läuferwicklung (7) und in den radialen Zwischenraum zwischen Läuferwelle (18) und Läuferwicklung (7) ragendem Bürstensystem (9) mit einem auf der Läuferwelle (18) angeordnetem Kommutator (4), dessen Lamellen (41, 42) bis in einen Bereich stirnseitiger Öffnungen (51, 61, 81) des Läuferpaketträgers (5, 6, 8) über die dem Läuferpaketträger zugewandte Stirnseite der Kommutatornabe hinaus herausgeführt und dort an Wickelkopfverbindungen der Läuferwicklung (7), angeschlossen sind, dadurch gekennzeichnet, daß ein Rund-Kommutator (4) mit einer bis in den ra-

dialen Zwischenraum zwischen Läuferwelle und Läuferpaket ragenden Bürstenschleiffläche für ein radial kontaktierendes Bürstensystem vorgesehen ist und die Lamellen (41, 42) des Rund-Kommutators (4) bis zu im Bereich der Öffnungen (51, 61, 81) liegenden, endseitigen Haken (43, 44) derart verlängert sind, daß die Haken (43, 44) beim Wickeln der Läuferwicklung von deren Wicklungsdraht (71, 72) mitumschlingbar sind.

2. Kommutator nach Anspruch 1, dadurch gekennzeichnet, daß der Läuferpaketträger (5) aus einem einteiligen Stanz-Biege-Blechteil besteht, das an seinem radial inneren Ende mit einer angeformten tiefgezogenen Nabe (53) auf die Läuferwelle (18) gedrückt ist und an seinem radial äußeren Ende mit dem Läuferblechpaket (1) fest verbunden ist (Fig. 3).

3. Kommutatormotor nach Anspruch 1, dadurch gekennzeichnet, daß der Läuferpaketträger (6) aus einem einstückigen Druckgußteil besteht, das an seinem radial inneren Ende mit einer angegossenen Nabe (63) auf die Läuferwelle (18) gedrückt ist und an seinem radial äußeren Ende mit dem Läuferblechpaket (1) fest verbunden ist (Fig. 4).

4. Kommutatormotor nach Anspruch 1, dadurch gekennzeichnet, daß der Läuferpaketträger (9) aus Kunststoff besteht und die Verlängerungen (47, 48) zwischen den Lamellen (41, 42) des auf der Läuferwelle (18) befestigten Rundkommutators (4) und den Haken (43, 44) zumindest über einen Teilbereich in den Läuferpaketträger (9) eingebettet sind (Fig. 5).

5. Kommutatormotor nach Anspruch 4, dadurch gekennzeichnet, daß der Läuferpaketträger (9) an das Läuferpaket (1) und/oder an die Läuferwelle (18) angespritzt bzw. angegossen ist (Fig. 5).

6. Kommutatormotor nach Anspruch 4 oder 5, dadurch gekennzeichnet, daß gleichzeitig mit dem Spritzen bzw. Gießen des Läuferpaketträgers (8) eine Läuferpaketisolierung (82), insbesondere der Nuten und/oder Stirnglächen des Läuferpaketes (1) aufgespritzt bzw. aufgegossen ist.

7. Kommutatormotor nach einem der Ansprüche 4 bis 6, insbesondere nach Anspruch 2, dadurch gekennzeichnet, daß die Verlängerungen (47, 48) der Lamellen (41, 42) des auf der Läuferwelle (18) befestigten Rundkommutators (4) bei der Herstellung des Läuferpaketträgers (6) miteingespritzt bzw. miteingegossen sind.

8. Kommutatormotor nach einem der Ansprüche 1 bis 7, dadurch gekennzeichnet, daß der Läuferpaketträger (5 bzw. 6 bzw. 8) im radial äußeren Bereich mit solchen Öffnungen (51 bzw. 61 bzw. 81) versehen und die Verlängerungen der Lamellen (41, 42) derart geformt sind, daß die äußeren Enden der Verlängerungen (47, 48) mit den Haken (43, 44) durch die Öffnungen (61) jeweils auch vom Zwischenraum her frei zugänglich sind (Fig. 3 bis 5).

9. Kommutatormotor nach einem der Ansprüche 4 bis 8, dadurch gekennzeichnet, daß die Verlängerungen (47, 48) vor dem Einspritzen bzw. Eingießen in den Läuferpaketträger (8) als getrennte Einzelteile mit ihren kommutatorseitigen Enden an die Lamellen (41, 42) eines üblichen Rundkommutators (4) angeschweißt, insbesondere angepunktet, sind.

10. Kommutatormotor nach einem der Ansprüche 4 bis 9, insbesondere nach Anspruch 5, dadurch gekennzeichnet, daß die Wicklungsdrähte (71, 72) durch Tauchlötung mit den umschlungenen Haken (43, 44) kontaktiert sind.

11. Kommutatormotor nach einem der Ansprüche 1 bis 10, dadurch gekennzeichnet, daß als dem Rundkommutator (4) zugeordnetes Bürstensystem ein Hammerbürstensystem (9) vorgesehen ist, das von der dem Läuferpaketträger (5 bzw. 6 bzw. 8) abgewandten Seite her in den verbleibenden Zwischenraum zwischen dem Rundkommutator (4) und dem Läuferblechpaket (1) hineinragt.

12. Kommutatormotor nach Anspruch 11, dadurch gekennzeichnet, daß das Hammberbürstensystem (9) im wesentlichen aus einer am Motorlagerschild (10) befestigten Kunststoffbürstenbrücke (91) mit axial angeformten, in den verbleibenden Zwischenraum ragenden Halterungsschienen (92, 93) besteht, an denen Hammerbürstenhalter (94, 95) schwenkbar eingehängt sind.

**Claims**

1. A commutator motor of flat construction, in particular for radiator ventilators in motor vehicles, with a rotor set (1) which is supported at one end via a rotor set carrier (5, 6, 8) at a radial distance from the rotor shaft (18), with a rotor winding (7), and with a brush system (9) which projects into the radial gap between the rotor shaft (18) and rotor winding (7), with a commutator (4) which is arranged on the rotor shaft (18) and whose laminations (41, 42) extend into the region of end-face openings (51, 61, 81) in the rotor set carrier (5, 6, 8) beyond the end-face of the commutator hub which faces towards the rotor set carrier, where they are connected to winding head connections of the rotor winding (7) characterised in that a round commutator (4) is provided, having a brush contact surface projecting into the radial gap between the rotor shaft and rotor set, for a radially contacting brush system, and the laminations (41, 42) of the round commutator (4) extend to end-face hooks (43, 44) located in the region of the openings (51, 61, 81), in such manner that during the winding of the rotor winding the hooks (43, 44) can be additionally encased by the winding wire (71, 72).

2. Commutator motor as claimed in claim 1, characterised in that the rotor set carrier (5) comprises an integral stamped-bent sheet metal component which at its radial inner end presses on to the rotor shaft (18) by means of a moulded-on, deep-drawn hub (53) and at its radial outer end is permanently connected to the rotor sheet-metal set (1) (Fig. 3).

3. Commutator motor as claimed in claim 1, characterised in that the rotor set carrier (6) comprises an integral die-cast component which at its radial inner end presses on to the rotor shaft (18) by means of a cast-on hub (63), and at its radial outer end is permanently connected to the rotor sheet-metal set (1) (Fig. 4).

4. Commutator motor as claimed in claim 1, characterised in that the rotor set carrier (9) comprises synthetic material and the extensions (47, 48) between the laminations (41, 42) of the round commutator (4) which is attached to the rotor shaft (18) and the hooks (43, 44) are embedded into the rotor set carrier (9) at least over a partial zone (Fig. 5).

5. Commutator motor as claimed in claim 4, characterised in that the rotor set carrier (9) is attached to the rotor set (1) and/or to the rotor shaft (18) by extrusion or casting (Fig. 5).

6. Commutator motor as claimed in claim 4 or 5, characterised in that simultaneously to the extrusion or casting of the rotor set carrier (8), a rotor set insulation (82) — in particular of the grooves and/or end surfaces of the rotor set (1) — is attached by extrusion or casting.

7. Commutator motor as claimed in one of the claims 4 to 6, in particular as claimed in claim 2, characterised in that the extensions (47, 48) of the laminations (41, 42) of the round commutator (4) attached to the rotor shaft (18) are formed during the production of the rotor set carrier (6) by extrusion or casting.

8. Commutator motor as claimed in one of the claims 1 to 7, characterised in that in the radial outer zone the rotor set carrier (5, 6, 8) is provided with openings (51, 61, 81) which are such, and the extensions of the laminations (41, 42) are shaped to be such, that the outer ends of the extension (47, 48) together with the hooks (43, 44), are freely accessible through the openings (61) even from the gap (Fig. 3 to Fig. 5).

9. Commutator motor as claimed in one of the claims 4 to 8, characterised in that prior to being extruded or cast into the rotor set carrier (8), the extensions (47, 48) consist of separate individual components whose commutator-side ends are welded, in particular spot-welded, to the laminations (41, 42) of a conventional round commutator (4).

10. Commutator motor as claimed in one of the claims 4 to 9, in particular as claimed in claim 5, characterised in that the winding wires (71, 72) are contacted to the encased hooks (43, 44) by dip soldering.

11. Commutator motor as claimed in one of the claims 1 to 10, characterised in that the brush system allocated to the round commutator (4) comprises a hammer brush system (9) which projects from the side facing away from the rotor set carrier (5, 6, 8) into the remaining gap between the round commutator (4) and the rotor sheet-metal set (1).

12. Commutator motor as claimed in claim 11, characterised in that the hammer brush system (9) fundamentally comprises a synthetic brush bridge (91) which is attached to the motor bearing plate (10), with axially moulded support bars (92, 93) which project into the remaining gap and from which hammer brush holders (94, 95) are suspended so as to be pivotable.

## Revendications

1. Moteur à collecteur en mode de construction plat, en particulier pour des ventilateurs de radiateurs dans des véhicules automobiles, avec un paquet rotorique (1) à enroulement rotorique (7), maintenu unilatéralement à une distance radiale de l'arbre rotorique (18) à l'aide d'un support de paquet rotorique (5, 6, 8), alors que dans l'intervalle radial entre l'arbre rotorique (18) et l'enroulement rotorique (7) pénètre un système de balai (9) avec un collecteur (4) disposé sur l'arbre rotorique (18), et dont les lamelles (41, 42) s'étendent au-delà du côté frontal du moyeu du collecteur, voisin du support de paquet rotorique, dans une zone d'ouvertures frontales (51, 68, 81) dudit support de paquet rotorique (5, 6, 8) et y sont reliées à des liaisons de têtes de bobines de l'enroulement rotorique (7), caractérisé par le fait qu'il est prévu, pour un système de balais à contact radial, un collecteur rond (4) à surface de forttement des balais pénétrant dans l'intervalle radial situé entre l'arbre rotorique et le paquet rotorique et que les lamelles (41, 42) du commutateur rond (4) sont prolongées de telle manière jusqu'à des crochets d'extrémité (43, 44) se situant dans la zone des ouvertures (51, 61, 81), que les crochets (41, 44) sont, lors de la réalisation de l'enroulement statorique, susceptibles d'être bouclés par le fil d'enroulement (71, 72) de ce dernier.

2. Moteur à collecteur selon la revendication 1, caractérisé par le fait que le support (51) du paquet rotorique est constitué par une pièce de tôle d'un seul tenant, découpée et pliée, montée à force sur l'arbre rotorique (18), au niveau de son extrémité radialement intérieure et à l'aide d'un moyeu (53) conformé par étirage profond, alors qu'au niveau de son extrémité radialement extérieure, elle est reliée de façon fixe au paquet de tôles rotoriques (1) (Fig. 3).

3. Moteur à collecteur selon la revendication 1, caractérisé par le fait que le support (6) du paquet rotorique est constitué par une pièce d'un seul tenant, moulée sous pression, montée à force sur l'arbre rotorique (18) par un moyeu venu de moulage à son extrémité radialement intérieure, alors qu'à son extrémité radialement extérieure elle est reliée de façon fixe au paquet de tôles rotoriques (1) (fig. 4).

4. Moteur à collecteur selon la revendication 1, caractérisé par le fait que le support (9) du paquet rotorique est constitué avec une matière synthétique et que les prolongements (47, 48) entre les lamelles (41, 42) du collecteur rond (41) fixées sur l'arbre rotorique (18) sont noyés, au moins sur une zone partielle, dans le support (9) du paquet rotorique (fig. 5).

5. Moteur à collecteur selon la revendication 4, caractérisé par le fait que le support (9) du paquet rotorique est fixé par injection ou par moulage sur le paquet rotorique (1) et/ou sur l'arbre rotorique (18) (fig. 5).

6. Moteur à collecteur selon la revendication 4 ou 5, caractérisé par le fait que simultanément avec l'injection ou le moulage du support (8) du paquet rotorique, une isolation (82) du paquet rotorique, en particulier des encoches et/ou des surfaces frontales du paquet rotorique (1), est réalisée par injection ou par moulage.

7. Moteur à collecteur selon l'une des revendications 4 à 6, en particulier selon la revendication 2, caractérisé par le fait que les prolongements (47, 48) des lamelles (41, 42) du collecteur rond (1) fixé sur l'arbre rotorique (18) sont réalisés par injection ou moulage simultanément lors de la fabrication du support (6) du paquet rotorique.

8. Moteur à collecteur selon l'une des revendications 1 à 7, caractérisé par le fait que le support (5, 6 ou 8) du paquet rotorique est pourvu, dans la zone radialement extérieure, d'ouvertures (51, 61 ou 81) telles et que les prolongements des lamelles (41, 42) sont conformés de telle manière que les extrémités extérieures des prolongements (47, 48) sont, avec les crochets (43, 44) qui passent par les ouvertures (61), également accessibles librement à partir de l'intervalle (fig. 3 à 5).

9. Moteur à collecteur selon l'une des revendications 4 à 8, caractérisé par le fait que les prolongements (47, 48) sont, avant l'injection ou le moulage dans le support (8) du paquet rotorique et sous la forme de pièces individuelles et séparées, soudées, de préférence par points, par leurs extrémités situées du côté du collecteur, aux lamelles (41, 42) d'un collecteur rond (4) classique.

10. Moteur à collecteur selon l'une des revendications 4 à 9, en particulier selon la revendication 5, caractérisé par le fait que les fils d'enroulement (71, 72) sont contactés avec les crochets (43, 44) bouclés en même temps, par une soudure au trempé.

11. Moteur à collecteur selon l'une des revendications 1 à 10, caractérisé par le fait qu'il est prévu, en tant que système de balais associé au collecteur rond (4), un système de balais malléiforme (9) qui, à partir du côté qui est éloigné du support (5, 6 ou 8) du paquet rotorique, pénètre dans l'intervalle qui subsiste entre le collecteur rond (4) et le paquet de tôles rotoriques (1).

12. Moteur à collecteur selon la revendication 11, caractérisé par le fait que le système de balais malléiforme (9) est constitué essentiellement d'un collier porte-balais (91) en matière plastique, fixé au flasque du moteur (10) et comportant des rails de support (92, 93) conformés axialement et pénétrant dans l'espace intermédiaire qui subsiste, rails (92, 93) conformés axialement et pénétrant dans l'espace intermédiaire qui subsiste, rails (92, 93) auxquels sont accrochés, avec possibilité de basculer, des supports de balais malléiformes (94, 95).

FIG 1

FIG 2

FIG 3

FIG 5

FIG 4